# EUROPÄISCHE PATENTSCHRIFT

(11) **EP 3 472 484 B1**
(45) Veröffentlichungstag und Bekanntmachung des Hinweises auf die Patenterteilung: **13.05.2020**
(21) Anmeldenummer: 17735018.8
(22) Anmeldetag: 19.06.2017
(51) Int. Cl.: F16D 23/06

(54) **SYNCHRONISATIONSVORRICHTUNG FÜR EIN SCHALTGETRIEBE**
SYNCHRONIZER DEVICE FOR A MANUAL TRANSMISSION
DISPOSITIF DE SYNCHRONISATION POUR UNE BOÎTE DE VITESSES MANUELLE

(30) Priorität: 20.06.2016 DE 102016111274
(43) Veröffentlichungstag der Anmeldung: 24.04.2019
(73) Patentinhaber: Getrag Ford Transmissions GmbH, 50735 Köln (DE)
(72) Erfinder: BAEHR, Julian, 40668 Meerbusch (DE)
(74) Vertreter: Wagner Albiger & Partner Patentanwälte mbB
(86) Internationale Anmeldenummer: PCT/EP2017/064938
(87) Internationale Veröffentlichungsnummer: WO 2017/220493

(56) Entgegenhaltungen:
- EP-A2- 1 757 830
- WO-A2-2009/076691
- DE-A1-102011 103 780

## Beschreibung

Die Erfindung betrifft eine Synchronisationsvorrichtung für ein Schaltgetriebe mit einer Welle und einem auf der Welle angeordnetem Schaltrad.

Die Synchronisationsvorrichtung in einem Schaltgetriebe beispielsweise in einem Kraftfahrzeug sorgt dafür, dass die Drehzahl der Welle mit der Drehzahl des darauf sitzenden Schaltrads synchronisiert wird, bevor dieses mit der Welle formschlüssig verbunden wird, wodurch ein neuer Gang im Schaltgetriebe eingelegt wird. Üblicherweise umfasst die Synchronisationsvorrichtung eine Nabe, die drehfest mit der Welle verbindbar ist, sowie eine axial verschiebbare Schiebemuffe, die über eine geeignete Verzahnung drehfest auf der Nabe sitzt. Ein Sperrelement, oft als Sperrring mit Sperrzähnen ausgebildet ist, begrenzt dabei in einer Sperrstellung die Verschiebbarkeit der Schiebemuffe. Solange die Bedingung für das Sperren des Sperrelements gegeben ist, kann die Schiebemuffe in axialer Richtung nicht über einen bestimmten Punkt hinaus bewegt werden. Damit wird sicher gestellt, dass beim Gangeinlegen das Herstellen der formschlüssigen Verbindung erst dann erfolgt, wenn zwischen Schiebemuffe und dem Gangrad keine Drehzahldifferenz mehr gegeben ist.

Es ist zudem bekannt, dass die Synchronisationsvorrichtung ein Reibpaket umfasst, das einen äußeren Synchronring, einen inneren Synchronring und einen zwischen dem äußeren Synchronring und dem innerem Synchronring angeordneten Zwischenring aufweist. Die äußere Synchronring und der innere Synchronring sind dabei der Welle bzw. der Nabe zugeordnet. Die Drehzahl des äußeren Synchronrings und die Drehzahl des inneren Synchronrings entsprechen der Drehzahl der Welle bzw. der Nabe, während der Zwischenring dem Schaltrad zugeordnet ist und mit diesem drehfest verbunden ist. Durch das Vorsehen von äußerem Synchronring, inneren Synchronring und Zwischenring ergeben sich innerhalb des Reibpakets mehrere Reibpaarungen.

Durch einen axialen Druck auf das Reibpaket wird ein Reibmoment zwischen Welle und Schaltrad erzeugt. Dieses Reibmoment sorgt für den erforderlichen Drehzahlausgleich zwischen Welle und Schaltrad. Je stärker dabei die Schaltkraft ist, welche den axialen Druck erzeugt, desto größer ist das Reibmoment zwischen den einzelnen Ringen des Reibpakets. Ein großes Reibmoment reduziert die Zeit für die Synchronisierung von Welle und Schaltrad, wodurch insgesamt die Schaltzeiten kleiner werden.

Bei dem Vorgang der Synchronisierung kann zwischen der sogenannten Vorsynchronisierung und der Hauptsynchronisation unterschieden werden. Bei der Vorsynchronisation wird der Sperrring in die Sperrstellung gebracht. In dieser Sperrstellung liegen die Flanken einer Anspritzung der Innenverzahnung der Schiebemuffe an entsprechenden Flanken der Sperrzähne des Sperrrings an. Damit die Schiebemuffe über den Sperrring hinaus bewegt werden kann, muss der Sperrring von der Schiebemuffe in Umfangsrichtung weggedrückt werden. Dazu bedarf es eines gewissen Entsperrmoments, das von der auf die Sperrzähne wirkenden Axialkraft und dem Winkel abhängt, den die Flanken der Anspritzung zur axialen Richtung haben. Solange das Entsperrmoment kleiner ist als das Reibmoment des Reibpakets, lässt sich der Sperrring nicht zur Seite drücken. Erst wenn aufgrund erfolgten Drehzahlausgleichs das Drehmoment im Reibpaket zusammenbricht, lässt sich der Sperrring zur Seite drehen. Der Hauptsynchronisation folgt die Freiflugphase, bis die Schiebemuffe auf einen Kupplungsring trifft, der drehfest mit dem Schaltrad verbunden ist. Um die Schaltkräfte beim Eindocken der Schiebemuffe in die Verzahnung des Kupplungsrings gering zu halten, ist eine spitze Anspitzung der Innenverzahnung der Schiebemuffe von Vorteil. Jedoch kann die Anspitzung der Innenverzahnung nicht beliebig reduziert werden, da ansonsten der Sperrring seine sichernde Sperrwirkung verlieren würde. Mit anderen Worten kann also die Schaltkraft über spitzer werdende Anspitzungen nicht beliebig klein werden.

Die Schaltkraft des Fahrers des Kraftfahrzeugs ist begrenzt oder soll aus Komfortgründen möglichst klein sein. Um Bauteile mit hohen Massenträgheiten schnell synchronisieren zu können, sind jedoch hohe Reibmomente und damit hohe Schaltkräfte erforderlich. Die EP 2 235 391 B1 beispielsweise offenbart eine Kraftverstärkungs- oder Servoeinheit für eine Synchronisationsvorrichtung, die mit Nabe, Schiebemuffe, Sperrring, äußerem Synchronring, Zwischenring und innerem Synchronring ausgestattet ist. Die Servoeinheit weist eine erste Servofläche an einem ersten Bauteil und mit einer an der ersten Servofläche anliegenden zweiten Servofläche an einem zweiten Bauteil auf. Das erste Bauteil ist dabei die Nabe, in die die die erste Servofläche in Form einer Schräge eingeformt ist. Das zweite Bauteil ist in Form eines Druckstücks ausgebildet, das als zweite Servofläche ebenfalls eine Schräge aufweist. Wenn auf das Druckstück beim Schalten eine Axialkraft eingeleitet wird, wirkt ein Drehmoment zwischen der Nabe und dem Druckstück, so dass bedingt durch die aneinander anliegenden Schrägen das Drehmoment eine zusätzliche axiale Kraft auf das Druckstück erzeugt. Dadurch wird die eigentliche Axialkraft verstärkt, wobei diese Verstärkung auch als Servokraft bezeichnet wird.

In der EP 2 235 391 B1 sind der äußere Synchronring und der innere Synchronring nicht drehfest miteinander verbunden. Der äußere Synchronring ist einstückig mit dem Sperrring ausgebildet, so dass sie eine Einheit bilden. Das Druckstück ist drehfest mit dem inneren Synchronring verbunden. Gleichwohl durch die Servoeinheit und die Erhöhung der Anzahl der Reibpaarungen im Reibpaket die Schaltkraft klein gehalten werden kann, besteht ein Bedarf an einer weiteren Synchronisationsvorrichtung, durch die sich ein mit der Synchronsisationsvorrichtung ausgestattetes Schaltgetriebe bequem bedienen lässt.

Die WO 2009/076691 A2 offenbart eine Synchronisationsvorrichtung mit Nabe, Sperrring, Reibpaket und eine Servoeinheit zur Erzeugung einer Servokraft auf das Reibpaket. Der Sperrring ist dabei einteilig mit einem äußeren Synchronring des Reibpakets ausgebildet.

Der Erfindung liegt daher die Aufgabe zu Grunde, eine Synchronisationsvorrichtung für ein Schaltgetriebe bereit zu stellen, durch die ein einfaches Bedienen des Schaltgetriebes möglich ist.

Die der Erfindung zu Grunde liegende Aufgabe wird mit der Synchronisationsvorrichtung gemäß Anspruch 1 gelöst. Ausführungsbeispiele der Erfindung können den Unteransprüchen zu Anspruch 1 entnommen werden.

Erfindungsgemäß ist vorgesehen, dass die Servokraft auf das Reibpaket über den äußeren Synchronring eingeleitet wird, der zum Sperrelement in einem kleinen Winkelbereich verdrehbar ist. Zudem ist erfindungsgemäß vorgesehen, dass das Sperrelement als Sperrring mit Sperrzähnen ausgebildet ist, die in der Sperrstellung des Sperrrings zur Anlage an den Zähnen der Innenverzahnung der Schiebemuffe dienen.

Der kleine Winkelbereich der Verdrehbarkeit kann kleiner als 10° oder 5° sein (360° entspricht einer vollen Umdrehung), wobei es auf die Verdrehbarkeit des äußeren Synchronrings zum Sperrelement im zusammengebauten Zustand der Synchronisationsvorrichtung ankommt. Die Verdrehbarkeit kann dabei auch durch Bauteile bestimmt werden, die mit dem Sperrring und/oder dem äußeren Synchronring zusammenwirken. Der äußere Synchronring stellt dabei ein Bauteil mit einer Reibfläche dar, die bestimmungsgemäß bei der Synchronisation zum Reibmoment des Reibpakets beiträgt.

Die erfindungsgemäße Verdrehbarkeit unterscheidet sich von einer drehfesten Verbindung, die lediglich aufgrund von Fertigungstoleranzen oder Gründen der Montierbarkeit mit einem gewissen Spiel behaftet ist, welches aber darüber hinaus keinen funktionellen Grund hat. Die Verdrehbarkeit gemäß Anspruch 1 führt zu einer Trennung der Funktionen "Servokraft erzeugen" und "Sperrstellung erzeugen", worauf später noch näher eingegangen wird.

In einem Ausführungsbeispiel ist der innere Synchronring drehfest mit dem Sperrring verbunden, sodass bei der Vorsynchronisation das auf den inneren Synchronring wirkende Reibmoment den Sperrring in die Sperrstellung dreht. Somit kommt hier dem inneren Synchronring die Funktion "Sperrstellung erzeugen" zu. Der Sperrring kann für die drehfeste Verbindung mit dem inneren Synchronring wenigstens eine radial nach innen gerichtete Mitnehmerlasche aufweisen, die in eine Nut des inneren Synchronrings greift. Vorzugsweise sind mehrere, in Umfangsrichtung zueinander beabstandete Mitnehmerlaschen vorgesehen, beispielsweise sechs Mitnehmerlaschen im Abstand von 60° zwischen benachbarten Mitnehmerlaschen.

Der innere Synchronring kann eine radial nach innen gerichtete Reibfläche aufweisen, um mit einer Konusfläche des Schaltrads zusammen zu wirken. Neben einer Reibpaarung zwischen dem drehfest mit dem Schaltrad verbundenen Zwischenring lässt somit der innere Synchronring eine weitere Reibpaarung zu, nämlich gebildet durch die radial nach innen gerichtete Reibfläche und der Konusfläche des Schaltrads. Das auf den inneren Synchronring wirkende Reibmoment, welches den Sperrring in die Sperrstellung dreht, setzt sich somit aus den Reibmomenten der beiden Reibpaarungen zusammen. Eine weitere Reibpaarung ist zwischen dem äußeren Synchronring und dem Zwischenring gegeben.

Wenn nach erfolgter Vorsynchronisation und Hauptsynchronisation der Sperrring aus der Sperrstellung gedreht werden soll, wirken die Reibmomente der beiden Reibpaarungen des inneren Synchronrings dem entgegen. Dies bedeutet, dass das Entsperrmoment entsprechend groß eingestellt werden kann, was über die Auslegung der Anspitzung der Innenverzahnung der Schiebemuffe realisiert werden kann. So kann eine vergleichsweise spitze Anspitzung gewählt werden, wodurch die Schaltkräfte beim Eindocken der Schiebemuffe in die Verzahnung des Kupplungsrings gering gehalten werden können. Im Gegensatz dazu beruht das Reibmoment im Stand der Technik gemäß der EP 2 235 391 B1, bei dem der äußere Synchronring drehfest mit dem Sperrring ausgebildet ist, welches dem Entsperrmoment entgegenwirkt, nur auf einer Reibpaarung, nämlich zwischen dem äußeren Synchronring und dem Zwischenring. Entsprechend weniger spitz können hier die Anspitzungen der Innenverzahnung der Schiebemuffe ausgebildet werden, um eine sichere Sperrung durch den Sperrrings in der Sperrstellung nicht zu gefährden. Wenn bei der EP 2 235 391 B1 der Sperrring die Sperrstellung verlässt, kommt es zu einer Verdrehung des äußeren Synchronrings relativ zu der Schiebemuffe bzw. relativ zu dem Zwischenring, der drehfest mit der Schaltrad verbunden ist. Bei der vorliegenden Erfindung kann die Bewegung des Sperrelements aus der Sperrstellung von einer gleichzeitigen bzw. vorangegangenen Bewegung des äußeren Synchronrings relativ zur Schiebemuffe entkoppelt sein. Für die Bewegung des Sperrelements aus der Sperrstellung ist eine (vorgelagerte) Relativbewegung des äußeren Synchronrings bezogen auf die Schiebemuffe nicht notwendig. Vielmehr kann die Position des äußeren Synchronrings bezogen auf die Schiebemuffe bzw. den Zwischenring bei der Bewegung des Sperrelements aus der Sperrstellung unverändert bleiben.

Die Synchronisationsvorrichtung kann so ausgelegt sein, dass die Bewegung des Sperrelements aus der Sperrstellung mit einer Verdrehung des inneren Synchronrings relativ zur Schiebemuffe verbunden ist. Die Bewegung des Sperrelements aus der Sperrstellung kann in beliebiger Richtung erfolgen, beispielsweise in Umfangsrichtung oder in radialer Richtung.

Die Synchronisationsvorrichtung kann ein Druckstück aufweisen, das in einer Nut der Nabe angeordnet ist und eine axiale Kraft der Schiebemuffe auf das Reibpaket überträgt. Das Druckstück kann dabei eine Aussparung aufweisen, in die ein Nocken des äußeren Synchronrings greift, sodass das Druckstück und der äußerer Synchronring drehfest miteinander verbunden sind. Über den Umfang der Nabe verteilt können mehrere Druckstücke vorgesehen sein. Entsprechend kann der äußere Synchronring auch mehrere Nocken aufweisen.

In einem Ausführungsbeispiel drückt das Druckstück mit einem Boden der Aussparung in axialer Richtung gegen den Nocken des äußeren Synchronrings. Somit lässt sich über das Druckstück eine axiale Kraft in das Reibpaket einleiten.

Die Nabe kann die erste Servofläche umfassen, während die zweite Servofläche dem Druckstück zugeordnet sein kann. Wird durch das Druckstück eine axiale Kraft über den äußeren Synchronring in das Reibpaket eingeleitet, wirkt auf den äußeren Synchronring ein Drehmoment, das ihn relativ zur Nabe in Umfangsrichtung (leicht) verdreht. Aufgrund der drehfesten Verbindung zwischen dem äußeren Synchronring und dem Druckstück wird das Druckstück relativ zur Nabe ebenfalls leicht verdreht. Diese Verdrehung des Druckstücks zu der Nabe führt zu einem Entlanggleiten der zweiten Servofläche des Druckstücks an der ersten Servofläche der Nabe. Dadurch kommt es zu einer axialen Relativbewegung zwischen Nabe und Druckstück, wodurch die auf das Druckstück wirkende Axialkraft verstärkt wird. Dieser verstärkende Wirkung bzw. die Servokraft ist somit auf das Zusammenspiel von Druckstück und äußerem Synchronring zurückzuführen. Druckstück und äußerer Synchronring übernehmen in diesem Ausführungsbeispiel somit die Funktion "Servokraft erzeugen".

Die zweite Servofläche kann alternativ auch an dem äußeren Synchronring angeformt sein, sodass der äußere Synchronring mit der zweiten Servofläche an der ersten Servofläche der Nabe anliegt. Das Druckstück kann dabei konventionell, also ohne Servoflächen ausgebildet sein.

Die erste Servofläche muss nicht notwendigerweise an der Nabe angeformt sein. Beispielsweise ist es möglich, die erste Servofläche an dem Sperrring auszubilden.

Die Nabe kann zwei Anschlagflächen für das Druckstück aufweisen, die sich im Wesentlichen senkrecht zur Umfangsrichtung erstrecken und die eine Verdrehbarkeit es Druckstücks zur Nabe definiert. Somit lässt sich auch der axiale Weg, den das Druckstück aufgrund des Zusammenwirkens der Servoflächen axial zurücklegen kann, begrenzen.

Das Druckstück kann einen Druckkörper wie eine federbelastete Kugel aufweisen, wobei der Druckkörper radial nach außen gegen die Schiebemuffe gedrückt werden kann. In der Schiebemuffe kann eine Vorsynchronisationsnut vorgesehen sein, in der sich der Druckkörper in Umfangsrichtung relativ zur Nabe bewegen kann. Eine solche Relativbewegung in Umfangsrichtung zur Nabe oder Welle ist dann gegeben, wenn das Druckstück mit der zweiten Servofläche ausgestattet ist und sich beim Entlanggleiten der ersten Servoflächen in Umfangsrichtung zur Nabe bewegt.

In einem Ausführungsbeispiel ist quer zur Vorsynchronisationsnut eine Druckkörperlaufbahn vorgesehen, in die der Druckkörper eingefädelt wird, nachdem das Sperrelement die Sperrstellung verlassen hat. Die Druckkörperlaufbahn bewirkt dabei, dass das Druckstück bezogen zur Schiebemuffe oder zur Nabe nicht mehr in Umfangsrichtung ausgelenkt werden kann. Dadurch wird ein unbeabsichtigter Servoeffekt durch das Druckstück vermieden. Die Druckkörperlaufbahn setzt vorzugsweise dabei in der Mitte der Vorsynchronisationsnut an.

Eine maximale Auslenkung von einer mittigen Stellung des Druckkörpers entlang der Vorsynchronisationsnut kann in etwa dem Weg entsprechen, den der Sperrring in Umfangsrichtung zurücklegt, wenn er die Sperrstellung verlässt und somit ein axiales Durchschieben der Schiebemuffe zulässt. Durch eine derartige Auslegung wird der Druckkörper beim Entsperren wieder in etwa in die mittige Stellung in der Mitte der Vorsynchronisationsnut zurückbewegt, was ein Einfädeln in die Druckkörperlaufbahn vereinfacht.

Der Sperrring kann eine axiale Anlagefläche für den äußeren Synchronring aufweisen. Dadurch ist es möglich, durch axialen Druck auf den Sperrring über den äußeren Synchronring axialen Druck in das Reibpaket zu geben.

Anhand der in den Figuren dargestellten Ausführungsbeispiele wird die Erfindung näher erläutert. Es zeigen:
- Figur 1: in Explosionsdarstellung ein Ausführungsbeispiel für eine erfindungsgemäße Synchronisationsvorrichtung;
- Figur 2: eine Nabe der Synchronisationsvorrichtung der Figur 1;
- Figur 3: zwei verschiedene Stellungen eines Druckstücks relativ zur Nabe;
- Figur 4: das Druckstück der Figur 3 ohne Druckkörper,
- Figur 5: einen Sperrring der Synchronisationsvorrichtung der Figur 1;
- Figur 6: einen äußeren Sperrring der Synchronisationsvorrichtung der Figur 1;
- Figur 7: einen Zwischenring der Synchronisationsvorrichtung der Figur 1;
- Figur 8: einen inneren Synchronring der Figur 1;
- Figur 9: die Ringe der Figuren 5 bis 8 im zusammengebauten Zustand;
- Figur 10: eine Schiebemuffe mit Innenverzahnung und Vorsynchronisationsnuten;
- Figur 11: diverse Positionen des Druckkörpers in der Vorsynchronisationsnut bzw. in einer Druckkörperlaufbahn; und
- Figur 12: schematisch das Zusammenwirken der einzelnen Bauteile der Synchron isationsvorrichtu ng.

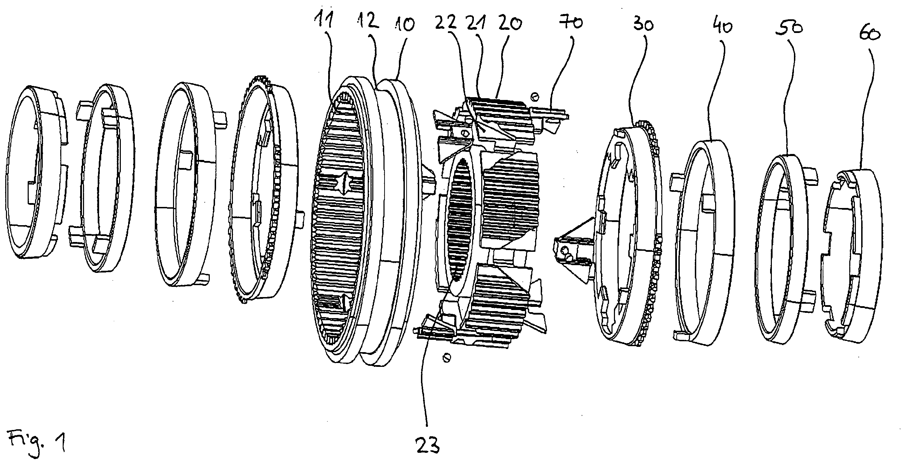

Figur 1 zeigt in einer Explosionsdarstellung ein Ausführungsbeispiel für eine erfindungsgemäße Synchronisationsvorrichtung, die in ihrer Gesamtheit mit 1 bezeichnet wird. Die Synchronisationsvorrichtung 1 umfasst eine Schiebemuffe 10, die in Einsatzlage auf einer Nabe 20 sitzt. Dabei steht eine Innenverzahnung 11 der Schiebemuffe 10 in Eingriff mit einer Außenverzahnung 21 der Nabe 20, sodass die Schiebemuffe 10 und die Nabe 20 drehfest miteinander verbunden sind. Jedoch lässt sich die Schiebemuffe 10 in axialer Richtung auf der Nabe 20 hin und her schieben.

Die Synchronisationsvorrichtung 1 umfasst des Weiteren einen Sperrring 30, der sich gegenüber der Nabe 20 bzw. der Schiebemuffe 10 in einem kleinen Winkelbereich in Umfangsrichtung verdrehen lässt. Ein Reibpaket der Synchronisationsvorrichtung 1 umfasst einen äußeren Synchronring 40, einen Zwischenring 50 sowie einen inneren Synchronring 60.

Zusätzlich umfasst die Synchronisationsvorrichtung 1 einen weiteren Sperrring sowie ein weiteres Reibpaket, sodass die hier dargestellte Synchronisationsvorrichtung 1 Teil einer Doppelgangschaltkupplung in einem Schaltgetriebe sein kann. Da der Aufbau des weiteren Sperrrings dem des Sperrrings 30 und der Aufbau des weiteren Reibpaket dem des Reibpakets mit den Ringen 30 bis 60 entspricht, wird im Folgenden nur Bezug genommen auf den Sperrring 30 sowie das Reibpaket mit dem äußeren Synchronring 40, dem Zwischenring 50 und dem inneren Synchronring 60. Durch die Doppelgangschaltkupplung lassen sich zwei Gänge des Schaltgetriebes einlegen. Dazu kann die Schiebemuffe in die eine oder die andere Schaltrichtungen axial verschoben werden.
An einer äußeren Mantelfläche weist die Schiebemuffe 10 eine umlaufende U-förmige Nut 12 für die Aufnahme einer Schaltgabel auf. Durch das Zusammenwirken von Nut 12 und der darin eingreifenden Schaltgabel wird eine auf die Schaltgabel axial wirkende Schaltkraft auf die Schiebemuffe 10 übertragen.

Die Synchronisationsvorrichtung 1 umfasst mehrere Druckstücke 70, wobei jeweils ein Druckstück 70 in einer Nut 22 sitzt, die in die Außenverzahnung 21 der Nabe 20 eingeformt ist. Eine Innenverzahnung 23 der Nabe 20 dient zur drehfesten Verbindung der Nabe 20 mit einer Welle des Schaltgetriebes, auf der die Nabe 20 sitzt. Bei den Druckstücken 70 handelt es sich um separate Bauteile, die insbesondere zum Sperrring 30 (bzw. allgemeiner separat zu einem Sperrelement) getrennt ausgebildet sind. Die Druckstücke 70 übernehmen hier nicht die Funktion des Sperrelements bzw. des Sperrrings 30.

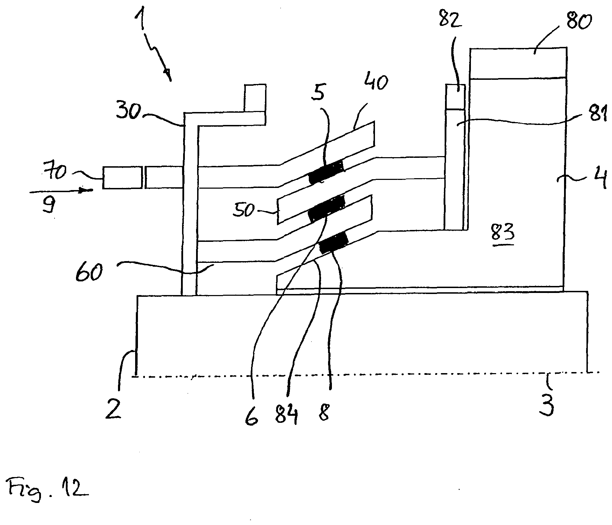

Figur 12 zeigt schematisch die einzelnen Bauteile der Synchronisationsvorrichtung 1 sowie deren Zusammenwirken. Die oben bereits erwähnte Welle ist in Figur 12 mit 2 bezeichnet und ist in dem hier nicht dargestellten Schaltgetriebe drehbar um eine Drehachse 3 gelagert. Figur 12 zeigt den Sperrring 30 sowie den äußeren Synchronring 40, den Zwischenring 50 und den inneren Synchronring 60. In Figur 12 nicht dargestellt sind die Schiebemuffe 10 und die Nabe 20. Das Druckstück 70 ist in Figur 12 schematisch durch ein Rechteck dargestellt. Figur 12 zeigt zudem ein Schaltrad 4, dass drehbar auf der Welle 2 gelagert ist. Das Schaltrad oder Losrad 4 weist eine Außenverzahnung 80 auf, mit der das Schaltrad 4 mit einem weiteren Zahnrad (nicht dargestellt) des Schaltgetriebes kämmt. Das Schaltrad 4 weist zudem einen Kupplungsring 81 mit einer Außenverzahnung 82 auf. Der Kupplungsring 81 ist dabei drehfest auf einem Grundkörper 83 des Schaltrads 4 angeordnet. Ebenfalls drehfest zum Grundkörper 83 angeordnet ist der Zwischenring 50.

Zwischen dem Sperrring 30 und dem inneren Synchronring 60 besteht eine drehfeste Verbindung. Zwischen dem äußeren Synchronring 40 und dem Sperrring 30 hingegen besteht eine Verdrehbarkeit in einem bestimmten Winkelbereich. D.h., der äußere Synchronring lässt sich gegenüber dem Sperrring 30 in einem gewissen Maße verdrehen. Auch sei darauf hingewiesen, dass der Sperrring 30 sich gegenüber der Welle 2 verdrehen kann.

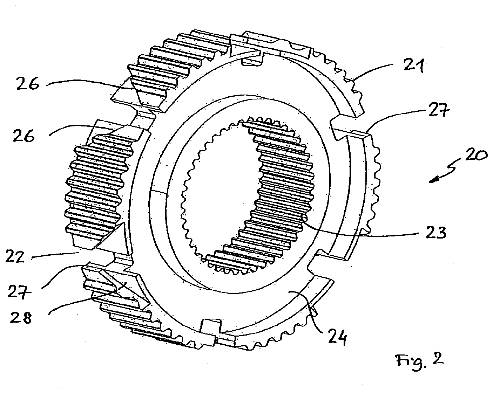

Figur 2 zeigt die Nabe 20 mit der Außenverzahnung 21 zur drehfesten Verbindung mit der Schiebemuffe 10 und der Innenverzahnung 23 zur drehfesten Verbindung mit der Welle 3. In Figur 2 ist zu erkennen, dass sich die Nut 22 bis zu einem Verbindungssteg 24 zwischen Innenverzahnung 23 und Außenverzahnung 21 erstreckt. Durch die Nut 22 werden im Verbindungssteg 24 Anschlagflächen 25 für den Druckkörper 70 definiert, die sich senkrecht zur Umfangsrichtung erstrecken. In der Außenverzahnung 21 der Nabe 20 werden durch die Nut 22 zwei Schrägen 26 hinein geschnitten, die im Folgenden auch als erste Servoflächen bezeichnet werden. Die zwei Schrägen 26 einer Nut 22 verlaufen V- förmig, wobei sie sich nicht über die gesamte Breite der Außenverzahnung 21, sondern nur ungefähr über die halbe Breite erstrecken. So ergeben sich durch die Nut 22 weitere Anschlagflächen 27, die senkrecht zur Umfangsrichtung ausgerichtet sind. Die Anschlagflächen 27 werden im Folgenden auch äußere Anschlagflächen genannt, da sie in radialer Richtung im Bezug auf die Anschlagflächen 25 weiter außen liegen. Die Nut 22 bildet zudem eine Auflagefläche 28 für das Druckstück 70 aus. Die Auflage 28 definiert die Lage des Druckstücks 70 in Bezug auf die Nabe 20 in radialer Richtung.

Insgesamt sind sechs Nuten 22 in der Nabe 20 vorgesehen, wobei in Figur 2 drei Nuten mit den V-förmig angeordneten Schrägen 26 axial nach rechts, die übrigen drei Nuten axial nach links gerichtet sind.

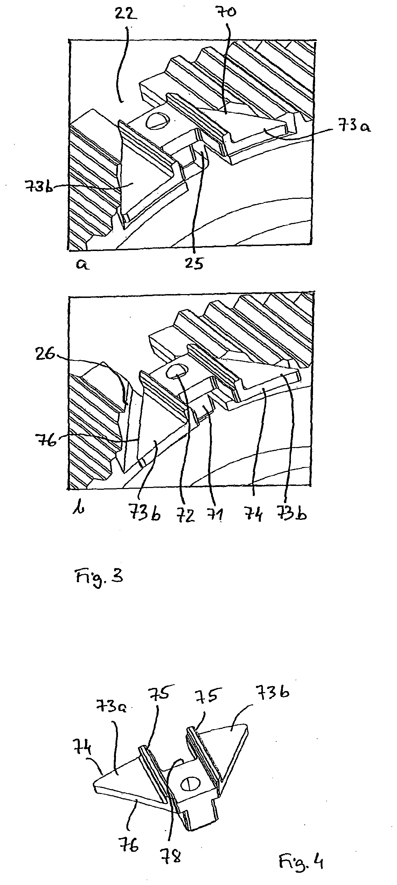

Aus den Figuren 3a und 3b wird deutlich, wie das Druckstück 70 in der Nut 22 angeordnet ist. Während Figur 3a eine Position des Druckstücks 70 in der Nut 22 zeigt, die als mittlere Position bezeichnet werden kann, da in Umfangsrichtung gesehen das Druckstück 70 mittig in der Nut 22 sitzt, zeigt Figur 3b das Druckstück 70 in einer in der Darstellung der Figur 3b nach rechts ausgelenkten Position. Man erkennt, dass in der ausgelenkten Position gemäß Figur 3b ein Federtopf 71 an einer der beiden Anschlagflächen 25 anliegt. Das Druckstück 70 ist somit in Umfangsrichtung gegenüber der mittleren Position der Figur 3 A nach rechts ausgelenkt.

Der Aufbau des Druckstücks 70 wird anhand der Figuren 3 und 4 beschrieben. Der Federtopf 71 zur Aufnahme einer Feder (nicht dargestellt) und einer Kugel 72, die im zusammengebauten Zustand der Synchronisationsvorrichtung 1 durch die Feder radial nach außen gegen die Schiebemuffe 10 gedrückt wird. Das Druckstück 70 weist zwei Flügel 73a, 73b auf, die jeweils die Grundform eines rechtwinkligen Dreiecks aufweisen. Die im rechten Winkel zueinander stehenden Kanten des rechtwinkligen Dreiecks sind mit 74 und 75 bezeichnet. Die Kante 75 ist dabei leicht erhöht, wobei ein oberer Rand der Kante 75 der radialen Fixierung des Druckstücks 70 zwischen der Nabe 20 und der Schiebemuffe 10 dient. In Einsatzlage liegt eine lange Kante des rechtwinkligen Dreiecks an der ersten Servofläche 26 der Nut 22 an. Diese lange Kante ist mit 76 bezeichnet und wird im Folgenden auch als zweite Servofläche bezeichnet. Wenn ausgehend von der in Figur 3a gezeigten mittleren Position des Druckstücks 70 in der Nut 22 einer in Umfangsrichtung wirkende Kraft auf das Druckstück 70 wirkt, wird das Druckstück 70 innerhalb der Nut 22 nicht nur in Umfangsrichtung ausgelenkt, sondern auch bezogen auf die Nabe 20 axial verschoben, da durch das Zusammenwirken von erster Servofläche 26 und zweiter Servofläche 76 die Bewegung des Druckstücks 70 in Umfangsrichtung mit einer Bewegung in axialer Richtung gekoppelt ist. In Zusammenschau der Figuren 3a und 3b wird deutlich, dass in der in Umfangsrichtung nach rechts aus gelenkten Position der Figur 3b das Druckstück 70 mit den Kanten 74 leicht über eine Stirnfläche der Außenverzahnung 21 hervor steht. Auch entsteht ein Spalt zwischen der zweiten Servofläche 76 des in der Figur 3b linken Flügels 73b und der dazu korrespondierenden ersten Servofläche 26 in der Nabe 20.

Im hier dargestellten Ausführungsbeispiel beträgt der Winkel der zweiten Servofläche 76 zu den beiden anderen Kanten 74, 75 jeweils rund 45°. Dies bedeutet, dass bei einer Auslenkung des Druckstücks 70 in Umfangsrichtung um eine Längeneinheit damit eine axiale Verschiebung um eine Längeneinheit einhergeht.

Zwischen den parallel verlaufenden Kanten 75 ist eine U-förmige Ausnehmung 77 vorgesehen. Die Ausnehmung weist einen Boden 78 auf, durch den eine auf das Druckstück 70 wirkende Axialkraft auf ein in die Ausnehmung greifendes Bauteil übertragen werden kann. Die Kanten 75 bilden im Wesentlichen die Seitenflächen der Ausnehmung 77 aus.

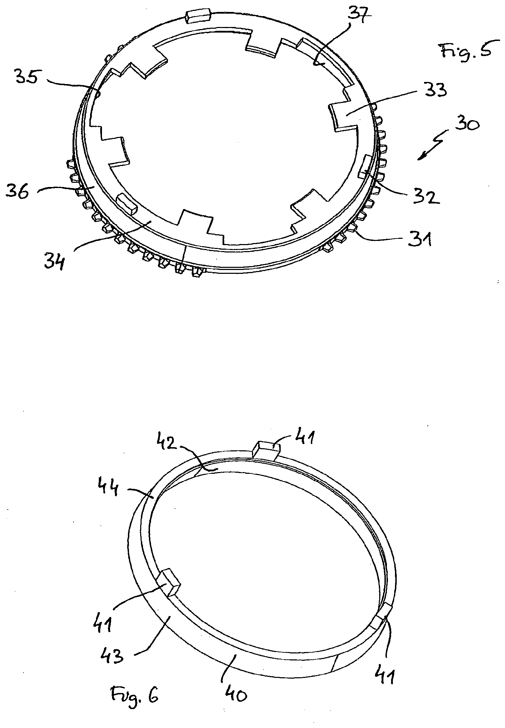

Wie der Figur 5 entnommen werden kann, weist der Sperrring 30 weist an seiner Außenfläche radial nach außen stehende Sperrzähne 31 auf. In axialer Richtung erstrecken sich drei Indexnocken 32, die um jeweils 120° verteilt am Umfang angeordnet sind. Im zusammengebauten Zustand der Synchronisationsvorrichtung 1 greift jeweils ein Indexnocken 32 in eine Nut 22 der Nabe 20, wobei der Indexnocken zwischen den sich gegenüberstehenden oberen Anschlagflächen 27 angeordnet ist. Bezug nehmend auf Figur 1 greifen die Indexnocken 32 des (rechten) Sperrrings 30 zwischen die äußeren Anlageflächen 27 der Nuten 22, deren V-förmig angeordneten Schrägen 26 in Figur 1 nach links weisen.

Durch das Zusammenwirken von Indexnocken 32 und den äußeren oder oberen Anschlagflächen 27 werden zwei Sperrstellungen des Sperrrings 30 in Bezug zur Nabe 20 festgelegt. Liegt der Nocken 32 an einer der äußeren Anschlagflächen 27 an, so ist eine erste Sperrstellung definiert. Liegt er an der gegenüberliegenden Anschlagfläche 27 an, ist eine zweite Sperrstellung definiert.

Der Sperrring 30 weist sechs radial nach innen gerichtete Mitnehmerlaschen 33 auf. Die Mitnehmerlaschen 33 dienen zur drehfesten Verbindung mit dem inneren Synchronring 60. Zudem ist an einer Stirnseite ein umlaufender, stirnseitiger Rand 34 vorgesehen, der durch Ausnehmungen 35 unterbrochen ist. Durch den umlaufenden Rand 34 lässt sich eine axiale Kraft, die über die Sperrzähne 31 auf den Sperrring 30 wirkt, auf den äußeren Synchronring 40 übertragen.

Zwischen dem umlaufenden Rand 34 und den Sperrzähnen 31 erstrecken sich eine äußere konische Mantelfläche 36 und eine innere konische Mantelfläche 37. Die innere konische Mantelfläche in 30 ist jedoch nicht dazu ausgelegt, mit dem äußeren Synchronring 40 eine Reibpaarung auszubilden. Die innere konische Mantelfläche besitzt somit keine Funktion in Verbindung mit dem Reibpaket.

Der äußere Synchronring 40 (siehe Figur 6) weist in axialer Richtung gerichtet drei Nocken 41 auf, die in Einbaulage in die U-förmige Ausnehmung 77 des Druckstücks 70 greift. Die Nocken 41 und die Ausnehmungen 77 des Druckstücks 70 sorgen somit für eine drehfeste Verbindung zwischen äußerem Synchronring 40 und den Druckstücken 70. Eine innere konische Mantelfläche 42 ist als Reibfläche ausgebildet, während eine äußere konische Mantelfläche 43 ohne Funktion bleibt. Eine Stirnfläche 44, von der sich in axialer Richtung die Nocken 41 erstrecken, dient als axiale Anschlagfläche für den umlaufenden Rand 34 des Sperrrings 30. Eine axiale Kraft auf den Sperrring wird über den Rand 34 und der dann daran anliegenden Stirnfläche auf den äußeren Synchronring übertragen, der sich an den übrigen Ringen des Reibpakets bzw. am Schaltrad 4 abstützt.

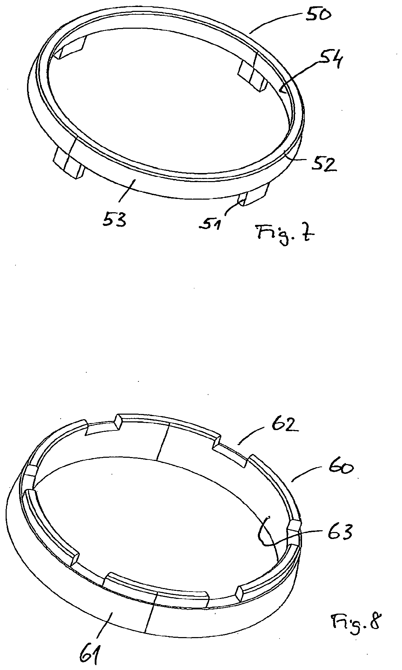

Der Zwischenring 50 (siehe Figur 7) weist vier Mitnehmerlaschen 51 auf, die der drehfesten Verbindung mit dem Schaltrad 4 dienen. Die Mitnehmerlaschen 51 erstrecken sich dabei von einem Ringgrundkörper 52 in axialer Richtung.

Eine äußere konische Mantelfläche 53 dient dazu, mit der inneren konischen Mantelfläche 42 des äußeren Synchronring 40 eine Reibpaarung auszubilden. Diese Reibpaarung, die auch als erste Reibpaarungen bezeichnet werden kann, ist in Figur 12 schematisch durch ein schwarz ausgefülltes Rechteck dargestellt, das mit 5 bezeichnet ist. Eine innere konische Mantelfläche 54 dient zur Ausbildung einer zweiten Reibpaarung 6. Die innere konische Mantelfläche 54 liegt dabei an einer äußeren konischen Mantelfläche 61 des inneren Synchronring 60 (siehe Figur 8) an. In Figur 12 ist die zweite Reibpaarung mit 6 bezeichnet.

Der innere Synchronring 60, der am Umfang sechs gleichmäßig beabstandete Ausnehmungen 62 aufweist, ist drehfest mit dem Sperrring 30 verbunden. Die drehfeste Verbindung erfolgt durch das Zusammenwirken der Mitnehmerlaschen 33 des Sperrrings 30 und den Ausnehmungen 62. Eine innere konische Mantelfläche 63 dient zur Ausbildung einer dritten Reibpaarung 8. Dazu liegt der innere Synchronring 60 mit der inneren konischen Mantelfläche 63 auf einer Konusfläche 84 des Schaltrads 4 auf.

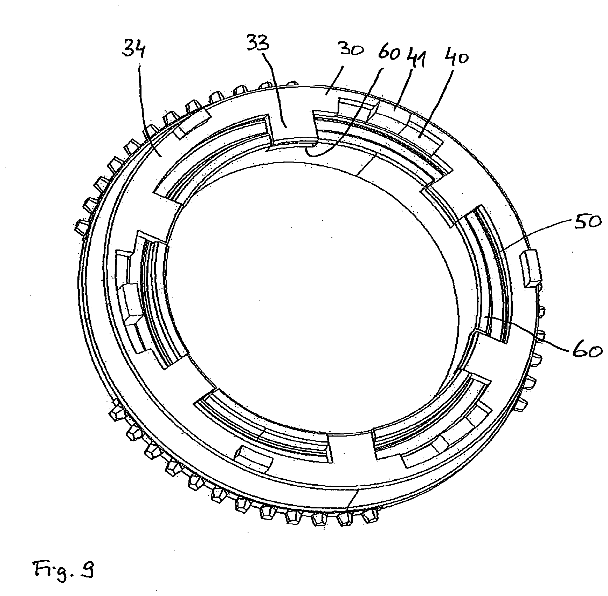

Figur 9 zeigt die in den Figuren 5 bis 8 dargestellten Ringer 30, 40, 50, 60 im zusammengebauten Zustand. Zu erkennen ist, dass, in radialer Richtung von innen nach außen gesehen, der innere Synchronring 60, der Zwischenring 50, der äußere Synchronring 40 und letztlich der Sperrring 30 ineinander gesteckt angeordnet sind. Aus Figur 9 wird deutlich, wie die Mitnehmerlaschen 33 des Sperrrings 30 in die Ausnehmungen 62 des inneren Synchronrings 60 greifen. Auch wird deutlich, dass die Stirnfläche 44, die durch den umlaufenden Rand 34 des Sperrrings 30 verdeckt, aber im Bereich der Ausnehmungen 35 zu erkennen ist, an dem umlaufenden stirnseitigen Rand 34 anliegt. Jeweils eine Ausnehmung 35 nimmt einen Nocken 41 des äußeren Synchronring 40 auf. Da die Länge der Ausnehmung 35 in Umfangsrichtung größer ist als die Breite des Nockens 41, lässt sich der Nocken 41 relativ zum Sperrring 30 verdrehen. Die Länge der Ausnehmung 35 ist dabei so dimensioniert, dass der Nocken 41 bei der Synchronisation nicht an die Nutenden stößt. Die begrenzte Verdrehbarkeit des äußeren Synchronrings 30 relativ zum Sperrring 30 wird durch andere Bauteile verursacht.

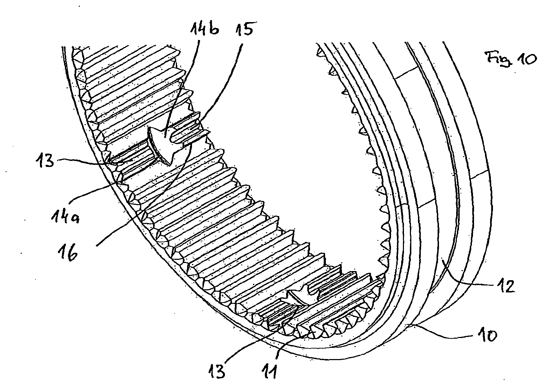

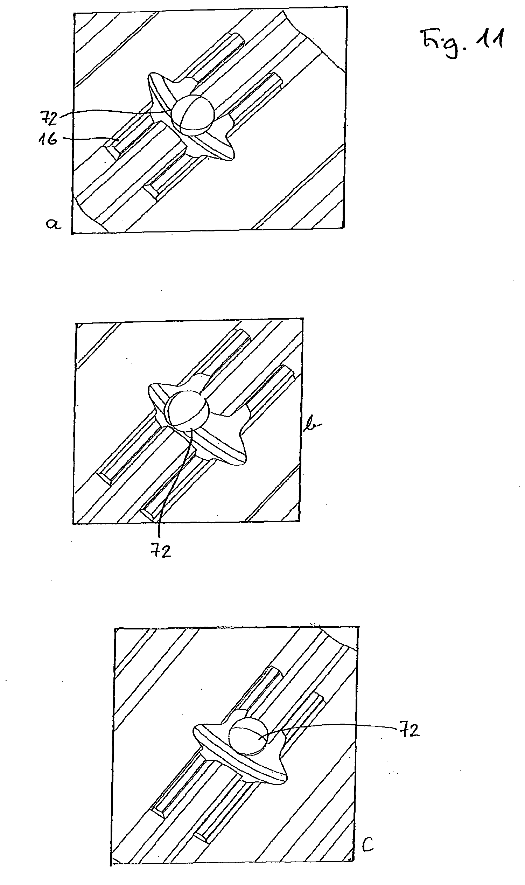

Figur 10 zeigt die Schiebemuffe 10 mit der umlaufenden Nut 12 sowie der Innenverzahnung 11. In die Innenverzahnung 11 sind jeweils drei Vorsynchronisationsnuten 13 für jede Schaltrichtung eingearbeitet. Die Vorsynchronisationsnut 13 dient zur Aufnahme der Kugel 72 des Druckstücks 70 (siehe Figuren 11a bis 11c).

Die Vorsynchronisationsnut 13 weist eine steilere Rampe 14a und eine flachere Rampe 14b auf. Die flachere Rampe 14b ist entgegen einer der Schaltrichtungen (durch den Pfeil 9 gekennzeichnet) gerichtet und erzeugt eine Kraft auf die Kugel 72, die eine axiale Komponente und eine radiale Komponente aufweist. Durch die radiale Komponente wird die Kugel 72 gegen die Kraft der nicht dargestellten Feder in den Federtopf 71 des Druckstücks 70 gedrückt. Durch die axiale Komponente wird die Kugel 72 und damit das Druckstücks 70 in Schaltrichtung 9 mitgenommen. Eine Druckkörperlaufbahn 15 verläuft parallel zu den Zähnen der Innenverzahnung 11 der Schiebemuffe 10 und besitzt einen Öffnungswinkel. Auf den entstehenden Rampen wird die Kugel 72 des Druckstücks 70 zentriert geführt. Die Druckkörperlaufbahn 15 wird durch die Vorsynchronisationsnut 13 unterbrochen. Durch den Öffnungswinkel der Druckkörperlaufbahn 15 entsteht am Übergang der Rampe der Vorsynchronisationsnut 13 eine entsprechende Verschnittkante.

Die Druckkörperlaufbahn 15 wird begrenzt durch parallele Erhebungen 16. Die Erhebungen 16 sind axial in Bauteilmitte durch die Vorsynchronisationsnut 13 unterbrochen. Je nach Abstand der zueinander parallelen Erhebungen 16 können diese durch zwei benachbarte Zähne der Innenverzahnung 11 der Schiebemuffe 10 ausgebildet sein. Dies ist im Ausführungsbeispiel der Figur 10 der Fall.

Beim Ausführungsbeispiel der Figur 11 hingegen laufen die Erhebungen 16 nicht bis zu den stirnseitigen Enden der Schiebemuffe 10 durch, sondern enden in einem gewissen Abstand davon. Somit wird für die Außenverzahnung 82 des Kupplungsrings 81 genügend Raum gelassen, wenn am Ende des Schaltvorgangs Kupplungsring 81 und Schiebemuffe 10 ineinandergreifen.

Figur 11a zeigt die Kugel 72 in einer mittigen Position innerhalb der Vorsynchronisationsnut. Wird die Schiebemuffe 10 in Schaltrichtung 9 geschoben, wirkt auf die Kugel 72 eine axiale Kraft, durch die das Druckstücks 70 gegen den äußeren Synchronring 40 drückt. Dadurch entsteht ein Reibmoment im Reibpaket, wodurch der äußere Synchronring 40 und somit das damit drehfest verbundene Druckstücks 70 relativ zur Schiebemuffe 10 verdreht wird. Entsprechend bewegt sich die Kugel 72 das Druckstücks 70 in Umfangsrichtung entlang der Vorsynchronisationsnut (siehe Figur 11b). Eine weitere Auslenkung der Kugel 72 entlang der Vorsynchronisationsnut 13 wird begrenzt durch die Anschlagflächen 25, die nur eine begrenzte Auslenkung des Druckstücks 70 relativ zur Narbe 20 bzw. zur Schiebemuffe 10 erlauben. Das Druckstücks 70 und somit die Kugel 72 werden bei der Entsperrung des Sperrrings 30, bedingt durch die drehfeste Verbindung mit dem äußeren Synchronring 30, wieder zurück in die mittlere Position bewegt. Gleichzeitig wird die Schiebemuffe 10 weiter auf das Schaltrad 4 zubewegt. Dabei wird die Kugel 72 zwischen den Erhebungen auf der Druckkörperlaufbahn eingefädelt (siehe Figur 11c).

Da der innere Synchronring 60 und der Sperrring 30 drehfest miteinander verbunden sind, wirkt dem Entsperrmoment, das an dem Sperrring 30 an dessen Sperrzähnen anliegt, das Reibmoment der zweiten Reibpaarung 6 und der dritten Reibpaarung 8 entgegen. Da der äußere Synchronring 40 und der Sperrring 30 nicht drehfest miteinander verbunden sind, baut sich in der ersten Reibpaarungen praktisch kein Reibmoment auf, was dem Entsperren des Sperrrings 30 entgegenwirkt. Durch die beiden Reibpaarungen 6, 8 ist aber das zu überwindende Reibmoment beim Entsperren des Sperrrings 30 vergleichsweise hoch, sodass die Anspitzungen der einzelnen Zähne der Innenverzahnung der Schiebemuffe 10 spitz ausgebildet werden können. Dies führt zu kleinen Schaltkräften, wodurch sich ein Schaltgetriebe, das beispielsweise in einem Personenkraftwagen eingebaut und mit der erfindungsgemäßen Synchronisationsvorrichtung ausgestattet ist, auch per Hand leicht und bequem schalten lässt.

### Bezugszeichenliste

- 1: Synchronisationsvorrichtung
- 2: Welle
- 3: Drehachse
- 4: Schaltrad

- 10: Schiebemuffe
- 11: Innenverzahnung
- 12: Nut
- 13: Vorsynchronisationsnut
- 14: Rampe (14a, 14b)
- 15: Druckkörperlaufbahn
- 16: Erhebung
- 20: Nabe
- 21: Außenverzahnung
- 22: Nut
- 23: Innenverzahnung
- 24: Verbindungssteg
- 25: Anschlagfläche
- 26: Schräge / erste Servofläche
- 27: äußere Anschlagfläche
- 28: Auflagefläche
- 30: Sperrring
- 31: Sperrzahn
- 32: Indexnocken
- 33: Mitnehmerlasche
- 34: umlaufender Rand
- 35: Ausnehmung
- 37: äußere konische Mantelfläche
- 38: innere konische Mantelfläche
- 40: äußerer Synchronring
- 41: Nocken
- 42: innere konische Mantelfläche
- 43: äußere konische Mantelfläche
- 44: Stirnfläche
- 50: Zwischenring
- 51: Mitnehmerlasche
- 52: Ringgrundkörper
- 53: äußere konische Mantelfläche
- 54: innere konische Mantelfläche
- 60: innerer Synchronring
- 61: äußere konische Mantelfläche
- 62: Ausnehmung
- 63: innere konische Mantelfläche
- 70: Druckstück
- 71: Federtopf
- 72: Kugel
- 73: Flügel (73a, 73b)
- 74: Kante
- 75: Kante
- 76: lange Kante / zweiteServofläche
- 77: Ausnehmung/Aussparung
- 78: Boden
- 80: Außenverzahnung
- 81: Kupplungsring
- 82: Außenverzahnung
- 83: Grundkörper
- 84: Konusfläche

## Patentansprüche

1. Synchronisationsvorrichtung (1) für ein Schaltgetriebe mit einer Welle (2) und einem auf der Welle angeordnetem Schaltrad (4), wobei die Synchronisationsvorrichtung (1) umfasst:
- eine Nabe (20), die drehfest mit der Welle (2) verbindbar ist
- eine Schiebemuffe (10), die drehfest auf der Nabe sitzt (20) und in axialer Richtung verschiebbar ist
- ein Sperrelement, das ausgelegt ist, in einer Sperrstellung die Verschiebbarkeit der Schiebemuffe (10) zu begrenzen,
- ein Reibpaket, das einen äußeren Synchronring (40), einen inneren Synchronring (60) und einen zwischen dem äußeren Synchronring (40) und dem innerem Synchronring (60) angeordneten Zwischenring (50) umfasst, wobei der äußere Synchronring (40) und der innere Synchronring (60) zueinander verdrehbar sind,
- eine Servoeinheit mit einer ersten Servofläche (26) an einem ersten Bauteil und mit einer an der ersten Servofläche (26) anliegenden zweiten Servofläche (76) an einem zweiten Bauteil, wobei ein Drehmoment zwischen dem ersten Bauteil und dem zweiten Bauteil zu einem Entlanggleiten der ersten Servofläche (26) relativ zu der zweiten Servofläche (76) führt, wodurch eine axial wirkende Servokraft auf das Reibpaket erzeugt wird,
wobei die Servokraft auf das Reibpaket über den äußeren Synchronring (40) eingeleitet wird, wobei der äußeren Synchronring (40) zum Sperrelement verdrehbar ist, **dadurch gekennzeichnet, dass** das Sperrelement als Sperrring (30) mit Sperrzähnen (31) ausgebildet ist, die in der Sperrstellung des Synchronelements zur Anlage an Zähnen einer Innenverzahnung (11) der Schiebemuffe (10) dienen.

2. Synchronisationsvorrichtung (1) nach Anspruch 1, **dadurch gekennzeichnet, dass** der innere Synchronring (60) drehfest mit Sperrring (30) verbunden ist.

3. Synchronisationsvorrichtung (1) nach Anspruch 2, **dadurch gekennzeichnet, dass** der Sperrring (30) eine radial nach innen gerichtete Mitnehmerlasche (33) aufweist, die zur formschlüssigen Verbindung in Umfangsrichtung in eine Ausnehmung (62) des inneren Synchronrings (60) greift.

4. Synchronisationsvorrichtung (1) nach einem der Ansprüche 1 bis 3, **dadurch gekennzeichnet, dass** der innere Synchronring (60) eine radial nach innen gerichtete Reibfläche aufweist, um mit einer Konusfläche (84) des Schaltrads (4) zusammen zu wirken.

5. Synchronisationsvorrichtung (1) nach einem der Ansprüche 1 bis 4, **dadurch gekennzeichnet, dass** ein Druckstück (70) vorgesehen ist, dass in einer Nut (22) der Nabe (20) angeordnet ist und eine axiale Kraft der Schiebemuffe (10) auf das Reibpaket überträgt.

6. Synchronisationsvorrichtung (1) nach Anspruch 5, **dadurch gekennzeichnet, dass** das Druckstück (70) eine Aussparung (77) aufweist, in die ein Nocken (41) des äußeren Synchronrings (40) greift, sodass Druckstück (70) und äußerer Synchronring (40) drehfest miteinander verbunden sind.

7. Synchronisationsvorrichtung (1) nach Anspruch 5 oder 6, **dadurch gekennzeichnet, dass** das Druckstück (70) mit einem Boden (78) der Aussparung (77) in axialer Richtung gegen den Nocken (41) des äußeren Synchronrings (40) drückt.

8. Synchronisationsvorrichtung (1) nach einem der Ansprüche 5 bis 7, **dadurch gekennzeichnet, dass** das Druckstück (70) die zweite Servofläche (76) und die Nabe die erste Servofläche (26) umfassen.

9. Synchronisationsvorrichtung (1) nach einem der Ansprüche 5 bis 8, **dadurch gekennzeichnet, dass** die Nabe (20) zwei Anschlagflächen (25) für das Druckstück (70) aufweist, die sich im Wesentlichen senkrecht zur Umfangsrichtung erstrecken und die eine Verdrehbarkeit des Druckstücks (70) zur Nabe (20) begrenzen.

10. Synchronisationsvorrichtung (1) nach einem der Ansprüche 5 bis 9, **dadurch gekennzeichnet, dass** das Druckstück (70) einen Druckkörper wie eine federbelastete Kugel (72) aufweist, wobei der Druckkörper radial nach außen gegen die Schiebemuffe (10) gedrückt wird.

11. Synchronisationsvorrichtung (1) nach Anspruch 10, **dadurch gekennzeichnet, dass** in der Schiebemuffe (10) eine Vorsynchronisationsnut (13) vorgesehen ist, in der sich der Druckkörper in Umfangsrichtung relativ zur Nabe (20) bewegen kann.

12. Synchronisationsvorrichtung (1) nach Anspruch 11, **dadurch gekennzeichnet, dass** quer zur Vorsynchronisationsnut (13) eine Druckkörperlaufbahn (15) vorgesehen ist, in die der Druckkörper eingefädelt wird, nachdem das Sperrelement die Sperrstellung verlassen hat.

13. Synchronisationsvorrichtung (1) nach Anspruch 11 oder 12, dass ausgehend von einer mittigen Stellung des Druckkörpers eine maximale Auslenkung entlang der Vorsynchronisationsnut (13) in etwa dem Weg entspricht, den das Sperrring (30) in Umfangsrichtung zurücklegt, wenn er die Sperrstellung verlässt und somit ein axiales Durchschieben der Schiebemuffe (10) zulässt.

14. Synchronisationsvorrichtung (1) nach einem der Ansprüche 1 bis 13, **dadurch gekennzeichnet, dass** der Sperrring (30) eine axiale Anlagefläche für den äußeren Synchronring (40) aufweist.

## Claims

1. Synchroniser device (1) for a manual transmission having a shaft (2) and a selector gear (4) mounted on the shaft, the synchroniser device (1) comprising:
- a hub (20) which can be connected to the shaft (2) in a non-rotational manner,
- a slider sleeve (10) which is supported on the hub (20) in a non-rotational manner and can be displaced in axial direction,
- a locking element that is designed to limit the displaceability of the slider sleeve (10) in a locked position,
- a friction package which comprises an outer synchroniser ring (40), an inner synchroniser ring (60) and an intermediate ring (50) arranged between the outer synchroniser ring (40) and the inner synchroniser ring (60), with the outer synchroniser ring (40) and inner synchroniser ring (60) being rotatable relative to each other,
- a servo unit having a first servo surface (26) on a first component and having a second servo surface (76) on a second component resting against the first servo surface (26), wherein a torque between the first component and the second component causes the first servo surface (26) to slide along relative to the second servo surface (76), thereby producing an axially acting servo force on the friction package,
wherein the servo force is introduced to the friction package by the outer synchroniser ring (40), wherein the outer synchroniser ring (40) can rotate relative to the locking element, **characterised in that** the locking element is designed as a locking ring (30) with locking teeth (31) which in the locked position of the synchroniser element engage with teeth of an internal gearing (11) of the slider sleeve (10).

2. Synchroniser device (1) according to claim 1, **characterised in that** the inner synchroniser ring (60) is connected to the locking ring (30) in a non-rotational manner.

3. Synchroniser device (1) according to claim 2, **characterised in that** the locking ring (30) has a radially inwardly oriented drive tab (33), which engages in a recess (62) of the inner synchroniser ring (60) to produce a form-fitting connection in circumferential direction.

4. Synchroniser device (1) according to any of claims 1 to 3, **characterised in that** the inner synchroniser ring (60) has a radially inwardly oriented friction surface, in order to cooperate with a conical surface (84) of the selector gear (4).

5. Synchroniser device (1) according to any of claims 1 to 4, **characterised in that** a pressure element (70) is provided which is arranged in a groove (22) of the hub (20) and transmits an axial force of the slider sleeve (10) to the friction package.

6. Synchroniser device (1) according to claim 5, **characterised in that** the pressure element (70) has a recess (77) into which a cam (41) of the outer synchroniser ring (40) engages so that the pressure element (70) and the outer synchroniser ring (40) are connected to each other in a non-rotational manner.

7. Synchroniser device (1) according to claim 5 or 6, **characterised in that** the pressure element (70) presses with a bottom (78) of the recess (77) in axial direction against the cam (41) of the outer synchroniser ring (40).

8. Synchroniser device (1) according to any of claims 5 to 7, **characterised in that** the pressure element (70), the second servo surface (76) and the hub comprise the first servo surface (26).

9. Synchroniser device (1) according to any of claims 5 to 8, **characterised in that** the hub (20) has two stop surfaces (25) for the pressure element (70), which extend essentially perpendicular to the circumferential direction and limit a rotatability of the pressure element (70) relative to the hub (20).

10. Synchroniser device (1) according to any of claims 5 to 9, **characterised in that** the pressure element (70) has a pressure body such as a spring-loaded ball (72), wherein the pressure body is pushed radially outwards against the slider sleeve (10).

11. Synchroniser device (1) according to claim 10, **characterised in that** a pre-synchronisation groove (13) is provided in the slider sleeve (10), in which pre-synchronisation groove the pressure body can move in circumferential direction relative to the hub (20).

12. Synchroniser device (1) according to claim 11, **characterised in that** transverse to the pre-synchronisation groove (13), a pressure body track (15) is provided into which the pressure body is threaded after the locking element has left the locked position.

13. Synchroniser device (1) according to claim 11 or 12, that starting from a middle position of the pressure body, a maximum deflection along the pre-synchronisation groove (13) corresponds approximately to the distance that the locking ring (30) travels in the circumferential direction when it leaves the locked position and thus enables the slider sleeve (10) to slide through in axial direction.

14. Synchroniser device (1) according to any of claims 1 to 13, **characterised in that** the locking ring (30) has an axial contact surface for the outer synchroniser ring (40).

## Revendications

1. Dispositif de synchronisation (1) pour une boîte de vitesses avec un arbre (2) et un pignon de changement de vitesse (4) disposé sur l'arbre, dans lequel le dispositif de synchronisation (1) comprend :
- un moyeu (20), qui peut être relié de manière solidaire en rotation à l'arbre (2)
- un manchon coulissant (10), qui repose de manière solidaire en rotation sur le moyeu (20) et est mobile dans la direction axiale
- un élément de blocage, qui est conçu, dans une position de blocage, pour limiter la mobilité du manchon coulissant (10),
- un bloc de friction, qui comprend une bague de synchronisation extérieure (40), une bague de synchronisation intérieure (60) et une bague intermédiaire (50) disposée entre la bague de synchronisation extérieure (40) et la bague de synchronisation intérieure (60), dans lequel la bague de synchronisation extérieure (40) et la bague de synchronisation intérieure (60) peuvent être amenées en rotation l'une par rapport à l'autre,
- un servomécanisme avec une première surface d'asservissement (26) sur une première pièce et avec une seconde surface d'asservissement (76), s'appliquant sur la première surface d'asservissement (26), sur une seconde pièce, dans lequel un couple entre la première pièce et la seconde pièce entraîne un glissement de la première surface d'asservissement (26) par rapport à la seconde surface d'asservissement (76), ce qui a pour effet qu'une force d'assistance agissant axialement est produite sur le bloc de friction,
dans lequel la force d'assistance est appliquée sur le bloc de friction par l'intermédiaire de la bague de synchronisation extérieure (40), dans lequel la bague de synchronisation extérieure (40) peut être amenée en rotation par rapport à l'élément de blocage, **caractérisé en ce que** l'élément de blocage est réalisé en tant que bague de blocage (30) avec des dents de blocage (31), qui, dans la position de blocage de l'élément de synchronisation, servent à prendre appui sur des dents d'une denture intérieure (11) du manchon coulissant (10).

2. Dispositif de synchronisation (1) selon la revendication 1, **caractérisé en ce que** la bague de synchronisation intérieure (60) est reliée de manière solidaire en rotation à la bague de blocage (30).

3. Dispositif de synchronisation (1) selon la revendication 2, **caractérisé en ce que** la bague de blocage (30) présente une languette d'entraînement (33) dirigée radialement vers l'intérieur, qui, pour la liaison par coopération de formes, s'insère dans la direction périphérique dans un évidement (62) de la bague de synchronisation intérieure (60).

4. Dispositif de synchronisation (1) selon l'une quelconque des revendications 1 à 3, **caractérisé en ce que** la bague de synchronisation intérieure (60) présente une surface de friction dirigée radialement vers l'intérieur, afin de coopérer avec une surface conique (84) du pignon de changement de vitesse (4).

5. Dispositif de synchronisation (1) selon l'une quelconque des revendications 1 à 4, **caractérisé en ce qu'**une pièce de poussée (70) est prévue, qui est disposée dans une rainure (22) du moyeu (20) et transmet une force axiale du manchon coulissant (10) sur le bloc de friction.

6. Dispositif de synchronisation (1) selon la revendication 5, **caractérisé en ce que** la pièce de poussée (70) présente un évidement (77), dans lequel s'insère une came (41) de la bague de synchronisation extérieure (40), de sorte que la pièce de poussée (70) et la bague de synchronisation extérieure (40) sont reliées l'une à l'autre de manière solidaire en rotation.

7. Dispositif de synchronisation (1) selon la revendication 5 ou 6, **caractérisé en ce que** la pièce de poussée (70) presse avec un fond (78) de l'évidement (77) dans la direction axiale contre la came (41) de la bague de synchronisation extérieure (40).

8. Dispositif de synchronisation (1) selon l'une quelconque des revendications 5 à 7, **caractérisé en ce que** la pièce de poussée (70) comprend la seconde surface d'asservissement (76) et le moyeu la première surface d'asservissement (26).

9. Dispositif de synchronisation (1) selon l'une quelconque des revendications 5 à 8, **caractérisé en ce que** le moyeu (20) présente deux surfaces de butée (25) pour la pièce de poussée (70), qui s'étendent sensiblement perpendiculairement à la direction périphérique et qui limitent une possibilité de rotation de la pièce de poussée (70) par rapport au moyeu (20).

10. Dispositif de synchronisation (1) selon l'une quelconque des revendications 5 à 9, **caractérisé en ce que** la pièce de poussée (70) présente un corps de poussée tel qu'une sphère (72) sollicitée par un ressort, dans lequel le corps de poussée est poussé radialement vers l'extérieur contre le manchon coulissant (10).

11. Dispositif de synchronisation (1) selon la revendication 10, **caractérisé en ce qu'**une rainure de pré-synchronisation (13), dans laquelle le corps de poussée peut se déplacer dans la direction périphérique par rapport au moyeu (20), est prévue dans le manchon coulissant (10).

12. Dispositif de synchronisation (1) selon la revendication 11, **caractérisé en ce qu'**une voie de roulement de corps de poussée (15), dans laquelle le corps de poussée est engagé après que l'élément de blocage a quitté la position de blocage, est prévue transversalement à la rainure de pré-synchronisation (13).

13. Dispositif de synchronisation (1) selon la revendication 11 ou 12, qu'une déviation maximale le long de la rainure de pré-synchronisation (13) à partir d'une position centrale du corps de poussée correspond à peu près au trajet que la bague de blocage (30) parcourt dans la direction périphérique lorsqu'elle quitte la position de blocage et admet donc un glissement axial du manchon coulissant (10).

14. Dispositif de synchronisation (1) selon l'une quelconque des revendications 1 à 13, **caractérisé en ce que** la bague de blocage (30) présente une surface d'appui axiale pour la bague de synchronisation extérieure (40).
